Europäisches Patentamt

(19) European Patent Office

Office européen des brevets

(11) Publication number: 0 116 766
A1

(12) **EUROPEAN PATENT APPLICATION**

(21) Application number: 83307665.6

(22) Date of filing: 16.12.83

(51) Int. Cl.³: **A 47 J 43/044**
**A 47 J 43/06**

(30) Priority: 07.01.83 GB 8300364

(43) Date of publication of application:
29.08.84 Bulletin 84/35

(84) Designated Contracting States:
AT BE CH DE FR GB IT LI LU NL SE

(71) Applicant: THORN EMI Domestic Appliances Limited
THORN EMI House Upper Saint Martin's Lane
London, WC2H 9ED(GB)

(72) Inventor: Baker, Scott Melvyn
17, Elmwood Road Hilsea
Portsmouth Hampshire(GB)

(72) Inventor: Griffin, Philip Henry
Wight Cottage Main Road Nutbourne
Near Chichester Sussex(GB)

(74) Representative: Marsh, Robin Geoffrey et al,
Thorn EMI Patents Limited The Quadrangle Westmount
Centre Uxbridge Road
Hayes Middlesex, UB4 0HB(GB)

(54) A food mixer and processor arrangement.

(57) A food mixer and processor arrangement includes a bowl (1) having a cover (2) formed with a support (5) shaped so as to be suitable for supporting a hand-held food mixer (6). A central drive shaft (8) having a blade assembly (9) is provided in the bowl (1), the shaft (8) having a gear boss (10) attached to the top thereof. The mixer (6) has a gear attachment (12), which is inserted through an aperture in the cover (2) when the mixer (6) is correctly positioned on the support (5), so that the gear attachment (12) meshes with the gear boss (10) on the shaft (8), operation of the mixer (6) consequently providing drive to the blade assembly (9).

: 1 :

## A FOOD MIXER AND PROCESSOR ARRANGEMENT

This invention relates to a food mixer and processor arrangement.

Known food mixers are generally provided with various attachments, such as whisks, kneaders, etc. for performing such food preparations as whisking, mixing, kneading, whereas known food processors are usually provided with blade-like attachments, so that food may be chopped, shredded, sliced or liquidised, and these two separate devices do not usually perform the same food preparation functions.

However, there are some food mixers which may be provided with shredder and/or slicer attachments, but generally both a conventional mixing device and a conventional processing device are required to enable the food to be prepared in any desirable manner available from both devices.

It is therefore an object of present invention to provide an arrangement including both a food mixer and a food processor, which is capable of performing substantially all the food preparation functions available from the two separately-used, conventional devices.

According to the invention there is provided a food mixer and processor arrangement comprising a bowl within which food can be placed, the bowl having processing means contained therein for processing the food and also having cover means, said cover means being provided with means for supporting a removable driving means, said driving means being arranged, when operated, to drive said processing means.

The driving means preferably comprises a hand-held food mixer provided with a gear attachment which is caused to mesh with gearing means attached to the processing means within the bowl, thus providing a means for driving the processing means.

Preferably the processing means consists of a blade assembly, as used in a conventional food processor, disposed on a central drive shaft located within the bowl, the processing means being removable from the bowl, so that it may be replaced by other processor attachments, such as a slicer blade.

The hand-held mixer may also be removed from the supporting means and used as a conventional mixer for whisking, kneading, etc, with conventional mixer attachments.

The bowl may also be used in conjunction with the mixer, in the conventional manner, by removal of the processing means from therewithin.

The invention will now be further described by way of example only with reference to the accompanying drawings, wherein:-

Figure 1 shows a complete embodiment of the present invention,

Figure 2 shows a hand-held mixer, incorporated in the invention, for use in a conventional manner,

Figure 3 shows a sectional view of a part of the embodiment in Figure 1,

Figure 4 shows another part of the embodiment from direction C in Figure 1,

Figure 5 shows an alternative processing means to that shown in Figure 1, and

Figures 6 and 7 show safety features which may be incorporated in the present invention.

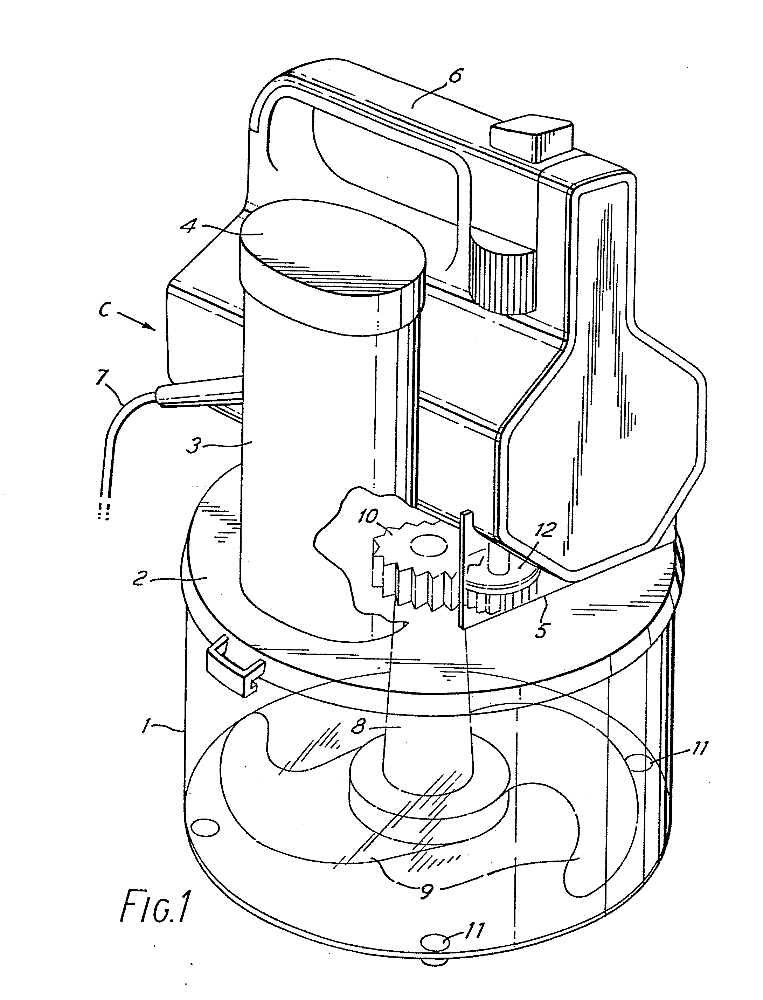

Referring now to Figure 1, a bowl 1 has a cover 2 with a feed-tube 3 formed thereon, so that, for safety purposes, food to be processed may be inserted into the bowl 1 down the feed-tube 3 whilst the cover 2 is in position, a pusher 4 being used to push down the food into the bowl 1.   Also formed on the cover 2 is a support 5 shaped so as to be suitable for supporting a hand mixer 6 as a driving means, a power lead for which is shown at 7.

Inside the bowl 1, there is provided a central drive shaft 8 having a blade assembly 9 attached at the bottom end thereof and a gear boss 10 attached to the top end thereof.   The bowl 1 is also provided with rubber feet 11 on the underside of its base to hold the bowl steady during operation of the mixer 6.

The hand mixer 6 has a gear attachment 12, which is inserted through an aperture in the cover 2 when the mixer 6 is positioned correctly on the support 5, the gear 12 thus meshing with the gear boss 10 on the drive shaft 8 within the bowl 1.

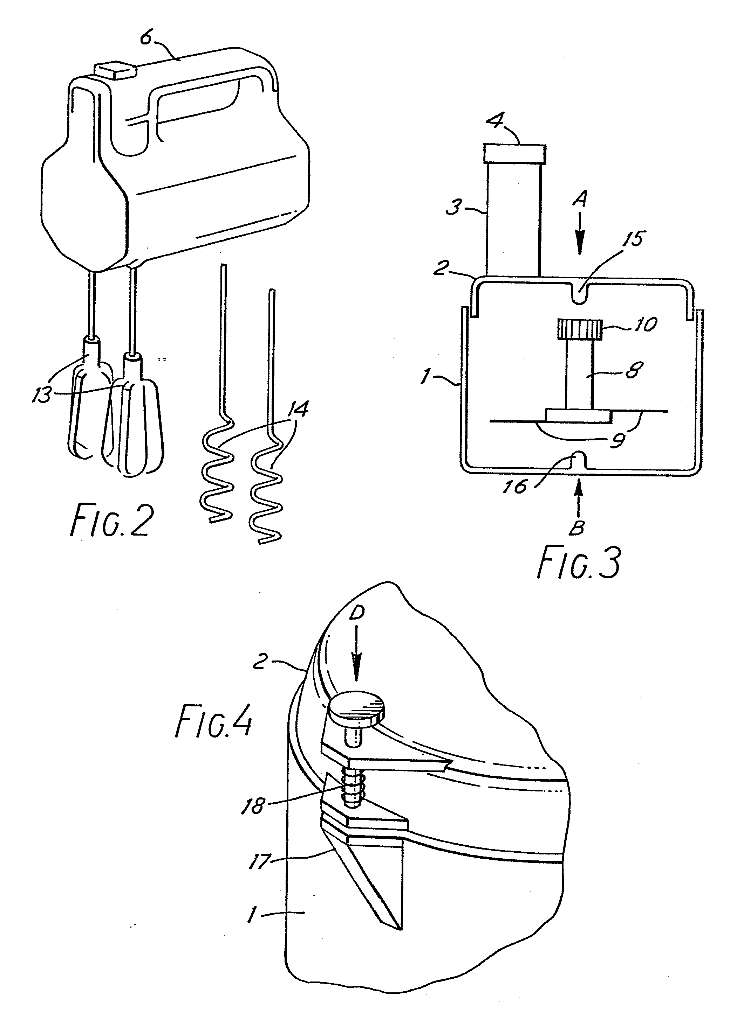

Figure 2 shows the handmixer 6 removed from the cover 2 of the bowl 1, so that it may be used as a conventional mixer with the usual mixer attachments, such as whisks 13 or coffee grinders 14 which may be inserted into the rear section of the mixer 6.

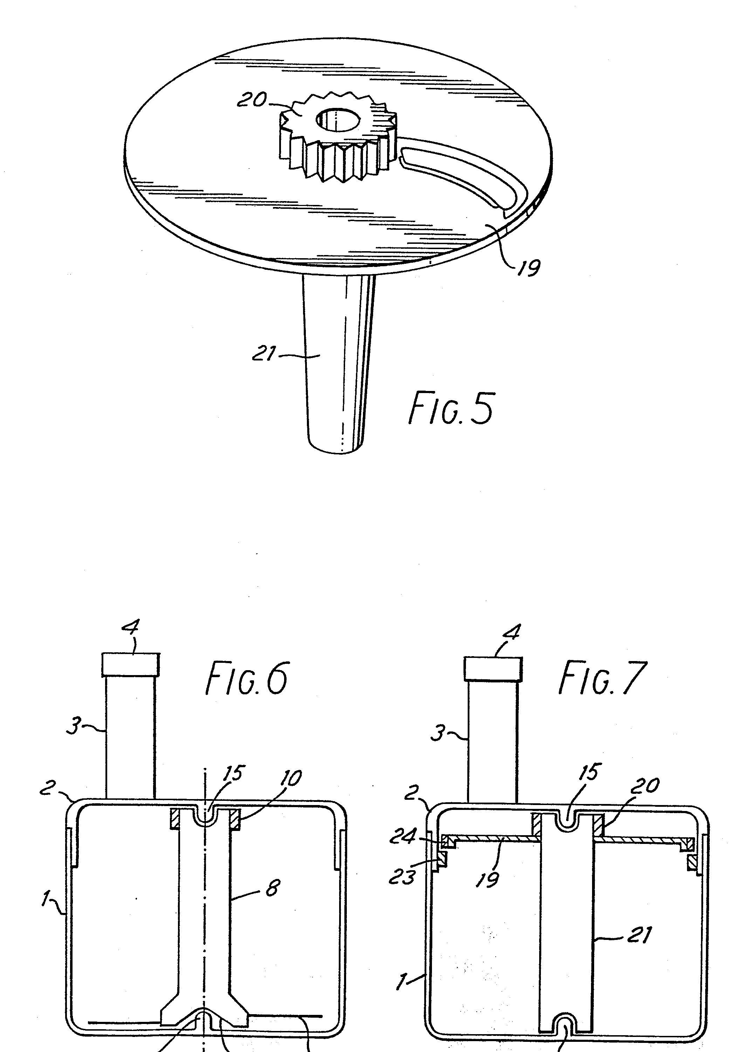

Figure 3 shows a sectional view of the bowl 1 with the cover 2, but without the mixer 6 positioned thereon.   It can be seen from Figure 3 that the base of the bowl 1 and the cover 2 have respectively spherical-ended locating pins, 16 and 15, moulded therein.   The pins, 15 and 16, provide correct location of the drive shaft 8 by insertion of the pins, in directions A and B, into corresponding holes in the top of the gear boss 10 and in the bottom of the blade assembly 9, on either end of the shaft 8.

Figure 4 is a view from direction C in Figure 1 and it shows a safety-interlock device provided on the bowl 1 and cover 2, to ensure that the cover is securely in place and cannot be removed when the mixer 6 is in position on the support 5.   This safety precaution is achieved by depression of a safety-interlock pin 18, in direction D, into a hole in protrusion 17 on the bowl 1, the depression being effected by the bottom face of the mixer 6 at the rear thereof, when the mixer is positioned on the support 5. The safety-interlock pin 18 is therefore firmly depressed within the hole by the weight of the mixer 6, until the mixer is removed from the support 5.

Figure 5 shows an alternative processor attachment to the blade assembly 9 consisting of a slicer plate blade 19 having a gear boss 20 and a drive shaft 21. It can.thus be seen that by removal of drive shaft 8, together with blade assembly 9, the slicer plate blade 19 may be positioned in the bowl 1, the shaft 21 being inserted between the locating pins 15 and 16, shown in Figure 3.

In operation of the present invention, the hand mixer 6 with gear attachment 12 is placed on the support 5 in the correct position, thus depressing safety-interlock pin 18, so that the cover 2 cannot be removed, and meshing gear attachment 12 with gear boss 10. Food to be processed may then be inserted down feed-tube 3 into the bowl 1. A user, holding the mixer 6, may then switch on the mixer to a desired set speed of rotation, thus causing gear attachment 12 to rotate. Due to the meshing of the gears, rotation of gear attachment 12 causes gear boss 10 to rotate, thus rotating drive shaft 8 and blade assembly 9, so that the food in the bowl 1 is processed by chopping, liquidising, etc.

When the processing is complete, the mixer 6 can be removed from the support 5, so that safety-interlock pin 18 is released and the cover 2 can then be removed.

Figures 6 and 7 show two additional features which may be incorporated in the present invention to conform to certain safety requirements, wherein the blades of the processor attachment should be prevented from rotating when the lid is removed from the bowl. Figure 6 shows the lid 2 positioned on the bowl 1, so that the drive shaft 8 is located between the spherical-ended locating pins 15 and 16. It can be seen that hole 22 at the lower end of the shaft 8 has substantially tapered sides so that, when the lid 2 is removed and pin 15 is no longer in contact with the top of the shaft 8, the shaft pivots about spherical-ended pin 16 away from vertical axis 25. This pivotal movement thus ensures that part of the base of the shaft 8 is in contact with the base of the bowl 1, so that the blade assembly 9 is prevented from rotating.

Figure 7 shows the processor attachment in Figure 5 located between the pins 15 and 16 within the bowl 1. In this example, the lid 2 has four triangular-shaped portrusions, one being labelled 23, attached on the inside thereof and the slicer plate blade 19 also has four correspondingly-shaped protrusions, one being labelled 24, arranged around the rim thereof. When the lid 2 is being placed on the bowl 1, the lid 2 and the blade 19 may be positioned relative to each other so that their respective protrusions do not collide. However, once the lid 2 is in place, it cannot easily be removed if the blade 19 is rotating, due to collision of the protrusions as the lid is lifted.

If the hand mixer 6 is required to be used as a conventional mixer, as shown in Figure 2, by removal of the cover 2 and the drive shaft 8, together with the blade assembly 9, the bowl 1 may be used as a conventional bowl within which food can be whisked, kneaded, etc. by the mixer 6.

By utilising suitable gearing arrangements, the set speeds provided by the hand mixer 6 may be increased or decreased, as required.

Alternative driving means may be utilised in accordance with the invention such as a detachable power unit, which is capable of driving the processing means in substantially the same way as the hand-held mixer and which may be removed from the support on the cover to enable the unit to be cleaned. Such a power unit may be desirable if a motor with a greater power output than that of the mixer is required for use, for example, in conjunction with a bowl of greater capacity than that used in the described embodiment of the present invention.

The present invention may of course be provided with any suitable food preparation attachments, which may be inserted between the locating pins 15 and 16, as shown in Figure 3. An alternative attachment may, for example, be for the preparation of soft ice cream.

It can therefore be envisaged that such an arrangement in accordance with the invention may be capable of performing any of the food preparation functions available from both conventional food mixers and conventional food processors.

CLAIMS

1.    A food mixer and processor arrangement comprising a bowl (1) within which food can be placed, the bowl (1) having processing means (9) contained therein for processing the food and also being provided with cover means (2), characterised in that said cover means (2) is provided with support means (5) for supporting removeable driving means (6), said driving means (6) being arranged, when operated, to drive said processing means (9).

2.    An arrangement as claimed in Claim 1 wherein said driving means (6) comprises a food mixer (6) provided with a gear attachment (12) which is caused to mesh, when supported by said support means (5), with gearing means (10) attached to the processing means (9) within the bowl (1).

3.    An arrangement as claimed in Claim 1 or 2 wherein said processing means (9) consists of a blade assembly (9) disposed on a central drive shaft (8) within said bowl (1).

4.    An arrangement as claimed in any preceding claim wherein said processing means (9) are removable from said bowl (1).

5.    An arrangement as claimed in any preceding claim wherein said cover means (2) is provided with a feed-tube, through which food may be introduced into said bowl (1).

6.    An arrangement as claimed in any preceding claim wherein said bowl (1) and said cover means (2) are provided with locating members (15, 16), so as to provide substantially correct location of said processing means (9) within said bowl (1).

7.    An arrangement as claimed in any preceding claim and including a safety-interlock device (17, 18) for preventing removal of said cover means (2) from said bowl (1) whilst said driving means (6) is supported on said support means (5).

8.    An arrangement as claimed in any preceding claim and including means (16, 22, 23, 24) for preventing rotation of said

**0116766**

processing means (9) when said cover means (2) is removed from said bowl (1).

9.    An arrangement as claimed in Claim 8 wherein said means (16, 22, 23, 24) consist of a pivotal arrangement (16, 22) for providing pivotal movement of said processing means (9) away from a substantially vertical rotational axis (25), thereby causing said processing means (9) to come into contact with the base of said bowl (1).

10.    An arrangement as claimed in Claim 8 wherein said means (16, 22, 23, 24) consists of protrusions (23, 24) provided respectively on said cover means (2) and said processing means (9), said protrusions (23, 24) being arranged so as to collide when removal of said cover means (2) is attempted during rotation of said processing means (9).

FIG.1

0116766

FIG.2

13

14

FIG.3

6

4

3

A

2

15

1

10

8

9

16

B

FIG.4

D

2

18

17

1

0116766

FIG.5

FIG.6

FIG.7

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-B-1 251 479 (SIEMENS) <br> * Whole document * | 1-5 | A 47 J 43/044 <br> A 47 J 43/06 |
| X | DE-A-2 000 171 (VEB) <br> * Whole document * | 1-6 | |
| X | FR-A- 974 262 (GROFFE) <br> * Whole document * | 1-4,6 | |
| X | CH-A- 362 499 (SPEMOT AG) <br> * Whole document * | 1-4 | |
| A | DE-C- 838 054 (WEIMERS) <br> * Whole document * | 1-4,6 | |
| A | DE-B-1 260 089 (PAUL K.G.) <br> * Whole document * | 1 | TECHNICAL FIELDS SEARCHED (Int. Cl. ³) <br><br> A 47 J <br> B 26 D |

The present search report has been drawn up for all claims

| Place of search <br> THE HAGUE | Date of completion of the search <br> 09-04-1984 | Examiner <br> SCHARTZ J. |
|---|---|---|